# EUROPEAN PATENT SPECIFICATION

(11) **EP 2 125 564 B1**
(45) Date of publication and mention of the grant of the patent: **09.01.2013**
(21) Application number: 08712708.0
(22) Date of filing: 13.02.2008
(51) Int. Cl.: B65D 75/62, B29C 59/00, B65D 30/16

(54) **CONTAINER AND METHOD FOR MANUFACTURING THEREOF**
BEHÄLTER UND HERSTELLUNGSVERFAHREN DAFÜR
RÉCIPIENT ET PROCÉDÉ DE FABRICATION ASSOCIÉ

(30) Priority: 28.03.2007 SE 0700769
(43) Date of publication of application: 02.12.2009
(73) Proprietor: Eco Lean Research & Development A/S, 1057 Copenhagen (DK)
(72) Inventor: GUSTAFSSON, Per, S-237 24 Bjärred (SE); JÖNSSON, Bengt, S-260 30 Vallåkra (SE); FORSS, Stefan, S-253 73 Gantofta (SE)
(74) Representative: Åkesson, Sten Jan-Åke
(86) International application number: PCT/SE2008/000115
(87) International publication number: WO 2008/118055

(56) References cited:
- WO-A1-2005/030597
- WO-A1-2007/086023
- DE-U1-202005 003 659
- FR-A1- 2 771 718
- FR-A1- 2 898 343
- US-A- 6 095 689
- US-A1- 2002 081 405
- US-A1- 2002 183 181
- US-B1- 6 667 081

## Description

### Field of the Invention

The present invention relates to a manually openable container and a method of manufacturing such a container having a top corner portion with a tab, which is to be separated along an opening initiation for opening of the container.

### Background Art

Many different types of container for liquid or powder products are currently available.

One type of container is of a collapsible type and comprises two side walls and a bottom wall, which walls are flexible and joined along a connecting portion to form a compartment, whose volume is dependent on the relative position of the walls.

This type of container can, before filling, be in a flat and sealed state. This makes it possible to sterilise the compartment of the container in connection with manufacture and, with maintained sterility, distribute the container to a filling plant, such as a dairy, to be filled.

A filled container of this type is in most cases opened by tearing or cutting off a corner or some other specially designed part of the container.

It is known to form an initiation in the connecting portion, which initiation is, for example, a cut where the material is removed, or a weakening. An initiation facilitates opening of the container but may at the same time cause problems by containers being opened unintentionally, for instance during transport. There is then a risk that the contents of the container flow out and ambient air can enter the container. Then bacteria can reach the contents of the container and reduce the shelf life of the contents.

In this context, mention can be made of US 4 974 732, which discloses a flexible container made of polyethylene or propylene with an opening arrangement. The container has a predetermined tear initiation which extends along the molecular orientation of the plastic in order to facilitate the opening of the container. Furthermore, the container has a notch arranged transversely to the molecular orientation of the plastic. A drawback of such a container is the risk of it being opened unintentionally because it is quite easy to open. The resistance to opening the container is so low that the container easily opens, for instance by getting caught on an object.

US 6 667 081 upon which the preambles of claims 1 and 9 are based discloses a container having a tearable portion for opening the container. US 5 941 642 discloses a flexible container with a built-in straw. The container has a tear initiation along one part of the container and no tear initiation along another part of the container. A drawback of this type of container is that although there is a part with a tear initiation, it is still difficult to open the container along the part without a tear initiation. There is a risk that the opening in the container will be oblique or that it will be necessary to use a pair of scissors to cut the container open.

GB 2 350 102 discloses a flexible container with initiations to facilitate opening of the container and a tear line between the initiations.

When opening containers of a collapsible type, a very great force is necessary in a first operation to tear through the two side walls of the container type, which are joined along a connecting portion. This connecting portion offers great resistance. Thus, a relatively great force is required to open the type of container, which can be particularly difficult for people with reduced manual strength.

There is also a risk that the opening does not follow an imaginary desirable path but that the opening will be difficult to control. If, for instance, the opening becomes too large, there is a risk that the contents of the container splash out. Too small an opening results in slow pouring. If the opening becomes oblique, it will also be difficult to pour without spilling.

DE 20 2005 003 659 U1 discloses a flexible container with walls joined along a connecting portion. The container has a top corner portion which defines a product channel to be used when emptying the container of its contents. An opening initiation extends across the product channel and a tab is to be separated from the container along said opening initiation. The opening initiation comprises a starting portion in the form of a cut, a terminating portion in the form of perforations and, extending therebetween, a stop portion. The cut is arranged in the connecting portion of the container on a first side of the product channel and the perforations are arranged in the connecting portion of the container on a second side, opposite the first side, of the product channel. When opening the container, the separation or tearing off must take place along the imaginary path, that is the opening must be controlled so that the tearing off follows the extent of the stop portion and reaches the terminating portion. To provide the desirable control, the container has marks in the form of arrows, which indicate to the user the imaginary path along which tearing off is to take place. However, there is a need for a container which allows more reliable separation of a tab along an opening initiation.

### Summary of the Invention

In view of that stated above, it is an object of the present invention to provide a container and a method of manufacturing a container which solve, or at least alleviate, the above problems. A special object is to provide a container which is easy to open and which reduces the risk of unintentional opening of the container.

To achieve at least some of these objects, and also other objects that will be evident from the following description, there are provided according to the present invention a method of manufacturing a manually openable container according to claim 1, and a manually openable container according to claim 9. Embodiments of the method and the container are evident from claims 2-9 and 10-13 respectively.

More specifically, according to the present invention a method is provided for manufacturing a manually openable container of a collapsible type for fluid contents according to claim 1.

An advantage of the method according to the present invention is that it allows manufacture of a container which is easy to open manually, that is without any instrument such as a pair of scissors, while at the same time the risk of unintentional opening of the container is reduced.

A further advantage is that the method allows manufacture of a container which will be easy to pour from since the provision of an opening initiation ensures that the opening of the container will be straight and even, which ensures good pouring properties.

The provision of a stop portion ensures that the risk of unintentional opening of the container is minimised.

The provision of a terminating portion having an extent in the connecting portion and also in the product channel ensures that the tab can be separated along the opening initiation in a reliable manner. More specifically, it will be possible to minimise the distance between the starting portion and the terminating portion, so that the separation, or tearing off, of the tab can easily be controlled so as to take place along an imaginary path and follow the extent of the stop portion in order to reach the terminating portion.

The inventive method may further comprise arranging the opening initiation with a second stop portion in the connecting portion on the second side of the product channel. The second stop portion can be arranged so as to connect to an outer edge of the connecting portion. The advantage of such a second stop portion is a reduction of the risk of unintentional opening of the container, for example if the unopened container is gripped and raised by the top corner portion, or if the top corner portion of the container should get caught or be affected by a force in some other manner during transport.

The method may further comprise forming of the starting portion, the stop portion and the terminating portion in one step, which is advantageous from the viewpoint of production since the time of manufacture of a container will be reduced. Forming in one step also results in the advantage that the starting portion, the stop portion and the terminating portion easily reach the correct position relative to each other and along an imaginary line or in immediate succession without displacement.

The method may further comprise providing the starting portion or the terminating portion by pressing, cutting and/or heating, which may take place in connection with the forming of the container from the web of material and which involves quick and easy processes of forming the starting and the terminating portion.

The method may further comprise providing the stop portion by pressing, cutting or heating, which involves quick and easy processes for forming of the stop portion and may take place in connection with the forming of the container from the web of material.

Furthermore, according to the present invention a container of a collapsible type for fluid contents according to claim 9 is provided.

An advantage of a container according to the present invention is that it is easy for the user to open, that the user understands how the container is to be opened and, thus, where to apply the force, and that the opening initiation controls the opening and reduces the resistance of the container material. As the user opens the container, this initially proceeds smoothly along the starting portion, after which the user reaches a stop, the stop portion, having a higher resistance that resists and makes further opening difficult. If the user decides to actually open the container, he overcomes the resistance and continues tearing to reach a portion having a normal or low resistance, the terminating portion.

Another advantage is that a container according to the present invention reduces the risk of the container being opened unintentionally, for example during transport.

A further advantage is that pouring will be easy from a container which is opened along an opening initiation, since the opening cut will be straight and even and have a predetermined location in a suitable position on the container.

By the starting portion of the container being located in the connecting portion on the first side of the product channel, it will be clearly indicated where the force is to be applied for opening of the container, which means that the opening is controlled even from the outer edge of the container.

Since the terminating portion has an extent both in the connecting portion and in the product channel, it is ensured that the tab can be separated along the opening initiation in a reliable manner. More specifically, it will be possible to minimise the distance between the starting portion and the terminating portion, so that the separation, or tearing off, of the tab can easily be controlled so as to take place along an imaginary path and follow the extent of the stop portion so as then to reach the terminating portion.

The stop portion of the container is partly located in the connecting portion on the first side of the product channel and also in the product channel, which renders it even more difficult for the container to be opened unintentionally, for example during transport, thereby causing the contents to flow out or contaminants from the external environment to reach the contents of the container and, for instance, reduce the shelf life.

The stop portion of the container may, at a first end, adjoin the starting portion and, at a second end, adjoin the terminating portion, which controls the opening over the entire portion of the container and minimises the risk that the opening deviates from the predetermined opening initiation.

The starting portion of the opening initiation may connect to an outer edge of the connecting portion, which makes it easy for the user to open the container from one outer edge of the container and indicates where the force is to be applied.

The terminating portion of the opening initiation may connect to an outer edge of the connecting portion, which reduces the risk that the opening deviates from the predetermined opening initiation at the other outer edge of the container.

The container may be made from a laminated plastic material.

### Brief Description of the Drawings

Embodiments of the present invention will now be described by way of example with reference to the accompanying drawings.
Fig. 1 is a schematic view of the forming of a container according to the present invention.
Fig. 2 is a side view of a container according to the present invention.
Fig. 3 is a side view of an opening portion according to the present invention.
Figs 4a-c illustrate schematically how a container according to the invention is being opened.

### Detailed Description

An embodiment of an inventive container will be described below. Also a method according to the present invention for manufacturing the container will be described.

The inventive container is of a collapsible type and is intended for powder or liquid contents.

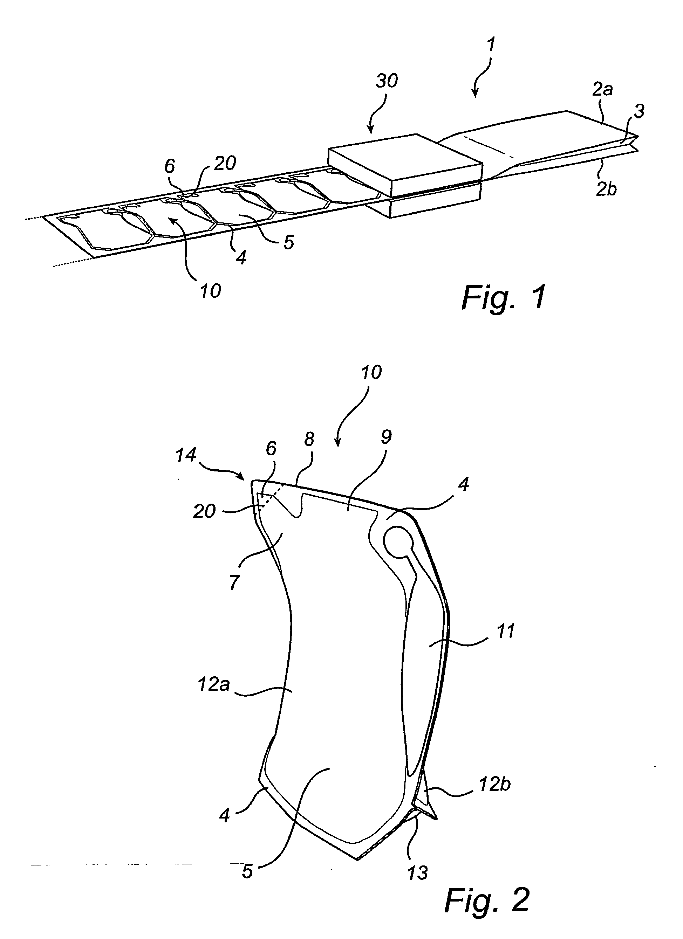

Fig. 1 shows a web of containers 1 folded in the shape of an M and comprising two opposite side-wall-forming portions 2a, 2b and, arranged therebetween, a folded bottom-wall-forming portion 3. Said web of containers 1 can, however, be formed in other ways, for example of three separate web portions which are brought together to form the desired structure with two opposite side wall portions and, arranged therebetween, a bottom-wall-forming portion.

The web of containers may consist of a container material in the form of a laminated plastic material. The laminated plastic material may comprise a light barrier layer and/or a gas barrier layer. The plastic material may also comprise a core layer comprising a polyolefin material and, optionally, also a filler in the form of a mineral material, such as chalk.

To manufacture a container 10, the two side-wall-forming portions 2a, 2b and the bottom-forming-portion 3 are compressed in a tool 30. The tool 30 joins the wall portions 2a, 2b, 3 along a connecting portion 4 to form a container 10 which defines a compartment 5. The tool 30, may, for instance, join the portions by heating and pressing. However, other joining methods, such as ultrasonic welding, induction sealing or gluing, are conceivable.

This results in a web of interconnected containers, which web can be wound onto a reel to be supplied in the form of a roll to a filling machine.

The tool 30 is arranged to form a top corner portion 14 of the container 10 to define a product channel 7 which is adapted to be used in emptying or pouring the contents of the container 10. The tool 30 may also be arranged to form an opening initiation 20, which extends across said product channel 7 and along which a tab 6 is to be separated for opening of the container 10. Alternatively this opening initiation 20 can be made in a preceding or subsequent operation.

Fig. 2 illustrates an inventive container 10. The container 10 is of a collapsible type and has two opposite side walls 12a, 12b and a bottom wall 13. The walls 12a, 12b, 13 are bendable or flexible and joined along the connecting portion 4 and define a compartment 5 whose volume is dependent on the relative position of the walls 12a, 12b, 13. The container 10 comprises a top corner portion 14 which defines a product channel 7.

In the shown embodiment, the container 10 further has a filling duct 9 which is defined by said side walls 12a, 12b and puts the compartment 5 in contact with the external environment. In the unfilled state of the container 10, the filling duct 9 can be sealed, said duct 9 being opened before filling. Subsequently the container 10 is filled and, after filling, the filling duct 9 is resealed. This makes it possible to ensure in a simple manner that unfilled containers 10 with sterile compartments can be manufactured in one place and then distributed, with maintained sterility, to another place, such as a dairy, to be filled.

The container 10 has in said top corner portion 14 an opening initiation 20, along which a tab 6 is to be separated for opening the container 10. The opening initiation 20 extends across said product channel 7, from the connecting portion 4 on a first side 24 of the product channel 7, over or in the product channel 7 and to the connecting portion 4 on a second side 25, opposite the first side 24, of the product channel 4. The container 10 is opened by separating or tearing off the tab 6 from the container 10 along the opening initiation 20.

As will be seen from the figure, the first side 24 of the product channel 7 may be an upper side of the top corner portion 14, while the second side 25 of the product channel 7 can be a lower or lateral side of the top corner portion 14.

The product channel 7 forms, in the open state of the container 10, a pouring spout which allows emptying the container 10 of its contents. By the opening initiation 20 extending across said product channel 7, it will be possible to provide a pouring spout with good pouring properties.

The container 10 may also have a handle 11 which is formed in the connecting portion 4 on a side, opposite the product channel 7, of the container 10. Like in the shown embodiment, the handle 11 may be formed as a gas-filled handle portion which is located in the connecting portion and which is grasped by a user to hold the container 10. Alternatively the handle 11 may be formed, for instance, as one or more recesses in the connecting portion, into which recesses a user inserts his fingers to hold the container 10.

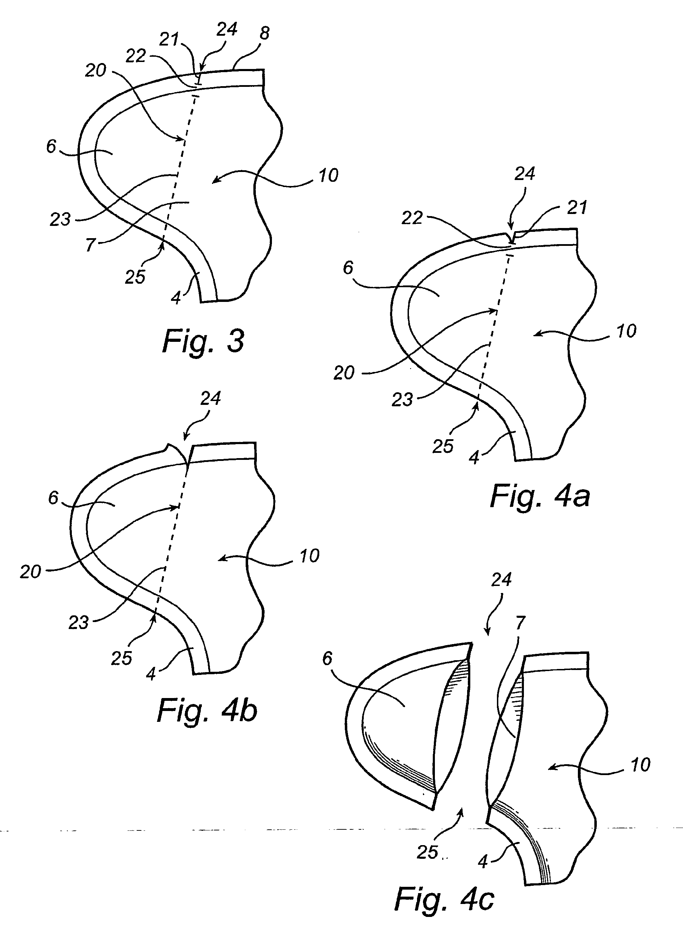

Fig. 3 illustrates in more detail an embodiment of an opening initiation 20 according to the present invention. The opening initiation 20 extends from the connecting portion 4 on a first side 24 of the product channel 7, over or in the product channel 7 and to the connecting portion 4 on a second side 25, opposite the first side 24, of the product channel 7. The opening initiation 20 comprises a starting portion 21, a stop portion 22 and a terminating portion 23.

The starting portion 21 has an extent in the connecting portion 4 on the first side 24 of the product channel 7 and starts at the outer edge 8 of the container 10. The starting portion 21 is designed so that a first separating force F1 is required to separate the tab 6 from the container 10 along that part of the opening initiation 20 along which extends the starting portion 21. A part of, or the entire, starting portion 21 can be made in the form of a notch, a slit or a cut. If the entire starting portion 21 is formed as a notch, a slit or a cut, the tab 6 is separated from the container 10 along that part of the opening initiation 20 along which extends said starting portion 21, in which case the required first separating force F1 is zero.

The terminating portion 23 has an extent in the connecting portion 4 on the second side 25 of the product channel 7 and in, or over, the product channel 7. The connecting portion 23 is designed so that a second separating force F2 is required to separate the tab 6 from the container 10 along that part of the opening initiation 20 along which extends the terminating portion 23.

The stop portion 22 extends between said starting portion 21 and said terminating portion 23 and is positioned in the connecting portion 4 on the first side 24 of the product channel 7 and extends also into, or over, the product channel 7. The stop portion 22 is designed so that a third separating force F3 is required to separate the tab 6 from the container 10 along that part of the opening initiation 20 along which extends the stop portion 22. The stop portion 22 adjoins at a first end the starting portion 21 and at a second end the terminating portion 23. The opening initiation 20 thus extends over an entire portion of the container 10, across the product channel 7.

The third separating force F3 is greater than the first F1 and the second F2 separating force. As a result, the stop portion 22 functions as a stop or a maximum resistance when opening the container 10. The third separating force F3 required to separate the tab 6 along that part of the opening initiation 20 along which extends the stop portion 22 should be sufficient so as to minimise the risk of unintentional opening of the container 10.

When manufacturing the container 10, the starting portion 21, the stop portion 22 and the terminating portion 23 can be formed in one step. The forming of these portions can take place during the forming of the actual container 20, but can also take place before or after the forming of the actual container 10.

The starting portion 21 and the terminating portion 23 are formed as weakenings of the container material while the stop portion 22 can be made of the untreated container material.

The forming of the starting portion 21 as a weakening in the container material makes it easy to separate the tab 6 along the opening initiation 20 and makes it possible to control the opening along the opening initiation 20.

The weakenings in the starting portion 21 and/or the terminating portion 23 can be provided in various ways.

The weakenings can be made by recessing, slitting or cutting to provide a perforation or a cut such as a notch or a slit.

If the starting portion 21 is made as a perforation or cut, a clear indication of the starting point of the opening initiation 21 is provided. If the starting portion 21 is made as a cut, the first separating force required to separate the tab 6 along that part of the opening initiation 20 along which extents the starting portion 21 is zero.

The weakenings can also be made by pressing and/or heating. The material can be thinned by pressing and the material can be made brittle by heating.

The use of cutting, pressing or heating serves to change the properties of the material to provide a weakening which facilitates the separation of the tab 6 along the opening initiation 20 and to control the opening. Also the stop portion 22 can be formed by cutting, pressing or heating.

The reinforcement of the stop portion 22 can be made, for example, by applying an additional layer of material.

Figs 4a-c illustrate a top corner portion 14 of another embodiment of an inventive container 10 and how this container 10 is being opened by separation or tearing off a tab 6 from the container 10 along an opening initiation 20.

The inventive container 10 is of a collapsible type and has two opposite side walls and a bottom wall. The filled container can thus stand by itself and can therefore be placed upright on a base.

When opening a container 10, it is placed in an upright state. The user then grasps the container 10 by a first hand and the tab 6 by a second hand.

The user then applies a force to the tab 6 for separating or tearing off the same from the container 10 along the opening initiation 20. The user must apply the first separating force F1 for separation along that part of the opening initiation 20 which is the starting portion 21, see Fig. 4a. The necessary first separating force F1 can be comparatively small, which means that, as the user applies said first separating force F1 to the tab 6, it will be easy to separate the tab along that part which is the starting portion 21.

When separation along said starting portion 21 is completed, the stop portion 22 is reached. Then the user must apply the third separating force F3 for separating or tearing off the tab 6 along the stop portion 22. The third separating portion F3 is greater than the first separating force F1, and therefore a higher resistance must be overcome for continued opening of the container 10. If the user does not intend to open the container 10 and observes that opening has taken place unintentionally, he chooses not to overcome the resistance for continued opening. Since the starting portion 21 is located in the connecting portion 4 on the first side 24 of the product channel 7, the container 10 has not been broken to allow the contents to come into contact with the external environment. If the user wants to continue opening the container 10, he applies the third, greater separating force F3 to overcome the resistance of the stop portion 22, see Fig. 4b.

If the user continues opening the container 10 and, thus, chooses to apply the third separating force F3, this increased necessary effort serves as a clear indication that the container 10 has not previously been subjected to an opening attempt or an incident of opening to put the compartment 5 of the container 10 in contact with the external environment. Consequently the opening initiation 20 acts as a tamper-proof closure.

With the tab 6 separated from the container 10 along the starting portion 21 and the stop portion 22, the terminating portion 23 is reached. The user notices this by a reduction of the resistance to opening the container 10 when the stop portion 22 has been passed. To separate the tab 6 along the terminating portion 23, the user applies the second separating force F2 and tears off the tab 6. The tab 6 is now completely separated from the container 10 along the entire opening initiation 20 and the container 10 is open, see Fig. 4c.

Since the third separating force F3 is greater than the first F1 and the second separating force F2, that is the required separating force for separating the tab 6 along the stop portion 22 is greater than the required separating force to separate the tab 6 along the starting portion 21 and the terminating portion 23, the stop portion 22 functions as a stop and counteracts unintentional opening of the container 10, for example during transport.

The third separating force F3 may thus be designed to be so great that the tab 6 cannot be separated by mistake.

By the terminating portion 23 having an extent not only in the connecting portion 24 on the first side 24 of the product channel 7, but also in or over the product channel 7, it is possible to minimise the extent of the stop portion 22. This is advantageous since the distance along which the third, greater separating force F3 must be applied can be reduced to a minimum. Moreover the stop portion 22 can be formed by the container material being left untreated, which means that there is no control during tearing off along said stop portion 22. A minimised extent of the stop portion 22 makes it easier for a user to reach the terminating portion 23 during the separation of the tab 6. However, the stop portion will prevent unintentional opening of the container 10 since the magnitude of the third separating force F3 is not reduced; it is the period of time during which said third separating force F3 must be applied which is reduced.

The container 10 according to the present invention is particularly intended for liquid food products, such as milk, water, juice, or wine. The container 10 can also be used for non-liquid products and other products than foods.

It will be appreciated that the present invention is not limited to the embodiments illustrated.

The terminating portion 23 can be arranged in direct contact with the stop portion 22, or one or more intermediate portions may be arranged between the stop portion 22 and the terminating portion 23.

The starting portion 21 and the stop portion 22 can be in immediate contact with each other, or one or more intermediate portions can be arranged between the starting portion 21 and the stop portion 22.

The opening initiation 20 could comprise a second stop portion and a second starting portion. Such an opening initiation 20 (not shown) could comprise, in turn, a starting portion 21, a stop portion 22, a terminating portion 23, a second stop portion arranged adjacent the terminating portion 23, and a second starting portion arranged adjacent the second stop portion. The force required to separate the tab from the container along that part of the opening initiation along which extends the second stop portion is greater than the force required to separate the tab along the terminating portion and the second starting portion. As a result, the container is allowed to be opened from either the first side or the second side of the product channel and, in other words, the user is not bound to open the container from one side, but the container can be opened from both terminal points of the opening initiation.

It also falls within the scope of the invention to arrange the opening initiation with a second stop portion in the connecting portion on the second side of the product channel, which second side can be the lower or lateral side of the top corner portion. This second stop portion can be arranged so as to connect to the outer edge of the connecting portion. Seen in a direction from the first side to the second side of the product channel, the opening initiation thus comprises in this case: starting portion, stop portion, terminating portion and the second stop portion. The second stop portion reduces the risk of unintentional opening of the container if a force is applied to the opening initiation from said second side. This means that the second stop portion ensures that the container is not opened if it is being raised by the top corner portion being gripped or if the top corner portion of the container during transport should get caught or knock against an object.

Several modifications and variations are thus conceivable, and therefore the present invention is exclusively defined by the appended claims.

## Claims

1. A method of manufacturing a manually openable container (10) of a collapsible type for fluid contents, comprising
joining, from a web of material (1) comprising two opposite side-wall-forming portions (2a, 2b), said two side-wall-forming portions (2a, 2b) along a connecting portion (4) to provide a container (10) with a defined compartment (5),
a top corner portion of the container (10) being designed to define a product channel (7) to be used when emptying the container (10) of its contents,
forming an opening initiation (20) which extends across said product channel (7), along which opening initiation (20) a tab (6) is to be separated for opening of the container (10), said opening initiation (20) comprising a starting portion (21), a stop portion (22) and a terminating portion (23),
the starting portion (21) being given an extent in the connecting portion (4) on a first side (24) of the product channel (7) and being designed so that, for separating of the tab (6) from the container (10) along that part of the opening initiation (20) along which extends the starting portion (20), a first separating force (F1) is required, and
the terminating portion (23) being designed in such a manner, at a distance from the starting portion (21), that for separating the tab (6) from the container (10) along that part of the opening initiation (20) along which extends the terminating part (23), a second separating force (F2) is required,
whereby the distance between the starting portion (21) and the terminating portion (23) forms a space which constitutes said stop portion (22), which is designed so that, for separating the tab (6) from the container (10) along that part of the opening initiation (20) along which extends the stop portion (22), a third separating force (F3) is required, said third separating force (F3) being greater than the first (F1) and the second (F2) separating force,
forming said web of material (1) with a folded, bottom-wall-forming portion (3) arranged between the side-wall-forming portions (2a, 2b) so that the compartment (5) of the completed container (10) is defined by two opposite side walls (12a, 12b) and a bottom wall (13), the volume of the compartment (5) being dependent on the relative position of the walls (12a, 12b, 13),
giving the terminating portion (23) an extent in the connecting portion (24) on a second side (25), opposite the first side (24), of the product channel (7) and also in the product channel (7),
forming the terminating portion (23) as weakenings of the container material, **characterized by**
giving the stop portion (22) an extent in the connecting portion (4) on the first side (24) of the product channel (7) and also in the product channel (7).

2. A method as claimed in claim 1, further comprising arranging the opening initiation (20) with a second stop portion in the connecting portion (4) on the second side (25) of the product channel (7).

3. A method as claimed in claim 2, in which the second stop portion is arranged so as to connect to an outer edge (8) of the connecting portion (4).

4. A method as claimed in any one of the preceding claims, wherein the starting portion (21), the stop portion (22) and the terminating portion (23) are formed in one step.

5. A method as claimed in any one of the preceding claims, wherein the forming of the starting portion (21) or the terminating portion (23) is performed by pressing.

6. A method as claimed in any one of claims 1-5, wherein the forming of the starting portion (21) or the terminating portion (23) is performed by cutting.

7. A method as claimed in any one of claims 1-5, wherein the forming of the starting portion (21) or the terminating portion (23) is performed by heating.

8. A method as claimed in any one of the preceding claims, wherein the forming of the stop portion (22) is performed by pressing, cutting, or heating.

9. A container of a collapsible type for fluid contents, comprising
two opposite side walls (12a, 12b), the walls being joined along a connecting portion (4) and defining a compartment (5),
said side walls (12a, 12b) forming, in a top corner portion, a product channel (7) to be used when emptying the container of its contents,
an opening initiation (20) being arranged with an extent across said product channel (7), along which opening initiation (20) a tab (6) is to be separated for opening of the container, said opening initiation (20) comprising
a starting portion (21) which is formed with an extent in the connecting portion (4) on a first side (24) of said product channel (7) and which requires a first separating force (F1) for separating the tab (6) from the container along that part of the opening initiating (20) along which extends said starting portion (21),
a terminating portion (23) which requires a second separating force (F2) for separating the tab (6) from the container along that part of the opening initiating (20) along which extends said terminating portion (23), and
a stop portion (22) which requires a third separating force (F3) for separating the tab (6) from the container along that part of the opening initiation (20) along which extends said stop portion (22),
the first (F1) and the second (F2) separating force being smaller than the third separating force (F3), and
the stop portion (22) being arranged between the starting portion (21) and the terminating portion (23),
the container further comprises a bottom wall (13), the volume of the compartment (5) of the container being dependent on the relative position of the walls,
said terminating portion (23) is formed with an extent in the product channel (7) and also in the connecting portion (24) on a second side (25), opposite said first side (24), of said product channel (7),
said terminating portion is formed as weakenings of the container material, **characterised in that**
said stop portion (22) is partly located in the connecting portion (4) on the first side (24) of the product channel (7) and also in the product channel (7).

10. A container as claimed in claim 9, in which the stop portion (22) at a first end adjoins the starting portion (21) and at a second end adjoins the terminating portion (23).

11. A container as claimed in any one of claims 9-10, wherein said starting portion (21) connects to an outer edge (8) of the connecting portion (4) on the first side (24) of the product channel (7).

12. A container as claimed in claim 9, wherein said terminating portion (23) connects to an outer edge (8) of the connecting portion (4) on the second side (25) of the product channel (7).

13. A container as claimed in any one of claims 9-12, wherein the container (10) is made from a laminated plastic material.

## Patentansprüche

1. Verfahren zur Herstellung eines von Hand aufmachbaren Behälters (10) vom faltbaren Typ für einen fluiden Inhalt, umfassend:
Verbinden, bei einer Bahn eines Materials (1), die zwei einander gegenüberliegende seitenwandbildende Abschnitte (2a, 2b) umfasst, der beiden seitenwandbildenden Abschnitte (2a, 2b) entlang eines Verbindungsabschnitts (4), um einen Behälter (10) mit einem definierten Raum (5) bereitzustellen,
wobei ein oberer Eckenabschnitt des Behälters (10) dazu bestimmt ist, einen Produktkanal (7) zu definieren, der beim Leeren des Inhalts in dem Behälter (10) zur Anwendung kommt,
Bilden eines Öffnungseinleitabschnitts (20), der sich über den Produktkanal (7) erstreckt, wobei entlang des Öffnungseinleitabschnitts (20) eine Lasche (6) abzutrennen ist, um den Behälter (10) zu öffnen, wobei der Öffnungseinleitabschnitt (20) einen Anfangsabschnitt (21), einen Anschlagabschnitt (22) und einen Endabschnitt (23) umfasst,
wobei dem Anfangsabschnitt (21) eine Ausdehnung in dem Verbindungsabschnitt (4) an einer ersten Seite (24) des Produktkanals (7) bereitgestellt wird, und er so gestaltet wird, dass zum Trennen der Lasche (6) von dem Behälter (10) entlang jenes Teils des Öffnungseinleitabschnitts (20), entlang dessen sich der Anfangsabschnitt (21) erstreckt, eine erste Trennkraft (F1) benötigt wird, und
der Endabschnitt (23) in einem Abstand von dem Anfangsabschnitt (21) auf eine solche Weise gestaltet wird, dass zum Trennen der Lasche (6) von dem Behälter (10) entlang jenes Teils des Öffnungseinleitabschnitts (20), entlang dessen sich der Endabschnitt (23) erstreckt, eine zweite Trennkraft (F2) benötigt wird,
wobei der Abstand zwischen dem Anfangsabschnitt (21) und dem Endabschnitt (23) einen Raum bildet, der den Anschlagabschnitt (22) bildet, welcher so gestaltet wird, dass zum Trennen der Lasche (6) von dem Behälter (10) entlang jenes Teils des Öffnungseinleitabschnitts (20), entlang dessen sich der Anschlagabschnitt (22) erstreckt, eine dritte Trennkraft (F3) benötigt wird, wobei die dritte Trennkraft (F3) größer als die erste (F1) und die zweite (F2) Trennkraft ist,
Ausführen der Bahn des Materials (1) mit einem gefalteten bodenwandbildenden Abschnitt (3), der so zwischen den seitenwandbildenden Abschnitten (2a, 2b) angeordnet ist, dass der Raum (5) des fertiggestellten Behälters (10) durch zwei einander gegenüberliegende Seitenwände (12a, 12b) und eine Bodenwand (13) definiert wird, wobei der Rauminhalt des Raums (5) von der relativen Position der Wände (12a, 12b, 13) abhängt),
Bereitstellen einer Ausdehnung des Endabschnitts (23) in dem Verbindungsabschnitt (4) an einer zu der ersten Seite (24) entgegengesetzten Seite (25) des Produktkanals (7) und auch in dem Produktkanal (7),
Bereitstellen des Endabschnitts (23) als Schwächungen des Behältermaterials, **gekennzeichnet durch**
Ausführen einer Ausdehnung des Anschlagabschnitts (22) in dem Verbindungsabschnitt (4) an der ersten Seite (24) des Produktkanals (7) und auch in dem Produktkanal (7).

2. Verfahren nach Anspruch 1, ferner umfassend das Versehen des Öffnungseinleitabschnitts (20) mit einem zweiten Anschlagabschnitt in dem Verbindungsabschnitt (4) an der zweiten Seite (25) des Produktkanals (7).

3. Verfahren nach Anspruch 2, wobei der zweite Anschlagabschnitt so angeordnet ist, dass er mit einer Außenkante (8) des Verbindungsabschnitts (4) verbunden ist.

4. Verfahren nach einem der vorhergehenden Ansprüche, wobei der Anfangsabschnitt (21), der Anschlagabschnitt (22) und der Endabschnitt (23) in einem Schritt gebildet werden.

5. Verfahren nach einem der vorhergehenden Ansprüche, wobei das Bilden des Anfangsabschnitts (21) oder des Endabschnitts (23) durch Pressen durchgeführt wird.

6. Verfahren nach einem der Ansprüche 1 bis 5, wobei das Bilden des Anfangsabschnitts (21) oder des Endabschnitts (23) durch Schneiden durchgeführt wird.

7. Verfahren nach einem der Ansprüche 1 bis 5, wobei das Bilden des Anfangsabschnitts (21) oder des Endabschnitts (23) durch Erhitzen durchgeführt wird.

8. Verfahren nach einem der vorhergehenden Ansprüche, wobei das Bilden des Anschlagabschnitts (22) durch Pressen, Schneiden oder Erhitzen durchgeführt wird.

9. Behälter vom faltbaren Typ für einen fluiden Inhalt, umfassend
zwei entgegengesetzte Seitenwände (12a, 12b), wobei die Wände entlang eines Verbindungsabschnitts (4) verbunden sind und einen Raum (5) definieren,
wobei die Seitenwände (12a, 12b) in einem oberen Eckenabschnitt einen Produktkanal (7) bilden, der beim Leeren des Inhalts in dem Behälter zur Anwendung kommt,
einen Öffnungseinleitabschnitt (20), der mit einer Ausdehnung über den Produktkanal (7) angeordnet ist, wobei entlang des Öffnungseinleitabschnitts (20) eine Lasche (6) abzutrennen ist, um den Behälter zu öffnen, wobei der Öffnungseinleitabschnitt (20) Folgendes umfasst:
einen Anfangsabschnitt (21), der mit einer Ausdehnung in dem Verbindungsabschnitt (4) an einer ersten Seite (24) des Produktkanals (7) gebildet ist, und der zum Trennen der Lasche (6) von dem Behälter entlang jenes Teils des Öffnungseinleitabschnitts (20), entlang dessen sich der Anfangsabschnitt (21) erstreckt, eine erste Trennkraft (F1) benötigt,
einen Endabschnitt (23), der zum Trennen der Lasche (6) von dem Behälter entlang jenes Teils des Öffnungseinleitabschnitts (20), entlang dessen sich der Endabschnitt (23) erstreckt, eine zweite Trennkraft (F2) benötigt, und
einen Anschlagabschnitt (22), der zum Trennen der Lasche (6) von dem Behälter entlang jenes Teils des Öffnungseinleitabschnitts (20), entlang dessen sich der Anschlagabschnitt (22) erstreckt, eine dritte Trennkraft (F3) benötigt,
wobei die erste (F1) und die zweite (F2) Trennkraft kleiner als die dritte Trennkraft (F3) sind, und
der Anschlagabschnitt (22) zwischen dem Anfangsabschnitt (21) und dem Endabschnitt (23) angeordnet ist,
wobei der Behälter ferner eine Bodenwand (13) umfasst, wobei der Rauminhalt des Raums (5) des Behälters von der relativen Position der Wände abhängt,
wobei der Endabschnitt (23) mit einer Ausdehnung in dem Produktkanal (7) und auch in dem Verbindungsabschnitt (24) an einer zu der ersten Seite (24) entgegengesetzen zweiten Seite (25) des Produktkanals (7) gebildet ist,
wobei der Endabschnitt als Schwächungen des Behältermaterials gebildet ist, **dadurch gekennzeichnet, dass**
sich der Anschlagabschnitt (22) teilweise in dem Verbindungsabschnitt (4) an der ersten Seite (24) des Produktkanals (7) und auch in dem Produktkanal (7) befindet.

10. Behälter nach Anspruch 9, wobei der Anschlagabschnitt (22) an einem ersten Ende an den Anfangsabschnitt (21) grenzt und an einem zweiten Ende an den Endabschnitt (23) grenzt.

11. Behälter nach einem der Ansprüche 9 bis 10, wobei der Anfangsabschnitt (21) an der ersten Seite (24) des Produktkanals (7) mit einer Außenkante (8) des Verbindungsabschnitts (4) verbunden ist.

12. Behälter nach Anspruch 9, wobei der Endabschnitt (23) an der zweiten Seite (25) des Produktkanals (7) mit einer Außenkante (8) des Verbindungsabschnitts (4) verbunden ist.

13. Behälter nach einem der Ansprüche 9 bis 12, wobei der Behälter (10) aus einem laminierten Kunststoffmaterial besteht.

## Revendications

1. Procédé de fabrication d'un conteneur à ouverture manuelle (10) de type démontable pour des contenus liquides, comprenant
le raccordement, à partir d'un réseau de matériel (1) comprenant deux parties opposées formant une paroi latérale (2a, 2b), lesdites deux parties opposées formant une paroi latérale (2a, 2b) le long d'une partie de raccordement (4) pour fournir à un conteneur (10) un compartiment défini (5),
une partie du coin supérieur du conteneur (10) étant conçu pour définir un canal de produit (7) à utiliser lors du vidage du conteneur (10) de ses contenus,
la formation d'une amorce d'ouverture (20) qui se prolonge sur ledit canal de produit (7), le long de cette amorce d'ouverture (20) une languette (6) doit être séparée pour ouvrir le conteneur (10), ladite amorce d'ouverture (20) comprenant une partie de démarrage (21), une partie d'arrêt (22) et une partie de terminaison (23),
la partie de démarrage (21) se prolongeant dans la partie de raccordement (4) sur un premier côté (24) du canal de produit (7) et étant conçue de sorte que, pour séparer la languette (6) du conteneur (10) le long de cette partie de l'amorce d'ouverture (20) le long de laquelle s'étend la partie de démarrage (20), une première force de séparation (F1) soit requise, et
la partie de terminaison (23) étant conçue de sorte que, à une distance de la partie de démarrage (21), pour séparer la languette (6) du conteneur (10) le long de cette partie de l'amorce d'ouverture (20) le long de laquelle s'étend la partie de terminaison (23), une deuxième force de séparation (F2) soit requise,
selon laquelle la distance entre la partie de démarrage (21) et la partie de terminaison (23) forme un espace qui constitue ladite partie d'arrêt (22) qui est conçue de sorte que, pour séparer la languette (6) du conteneur (10) le long de cette partie de l'amorce d'ouverture (20) le long de laquelle s'étend la partie d'arrêt (22), une troisième force de séparation (F3) soit requise, ladite troisième force de séparation (F3) étant plus grande que la première (F1) et la deuxième (F2) forces de séparation,
formant ledit réseau de matériel (1) avec une partie repliée formant la paroi inférieure (3) disposée entre les parties formant la paroi latérale (2a, 2b) de sorte que le compartiment (5) du conteneur terminé (10) soit défini par deux parois latérales opposées (12a, 12b) et une paroi inférieure (13), le volume du compartiment (5) étant dépendant de la position relative des parois (12a, 12b, 13),
fournissant à la partie de terminaison (23) une prolongation vers la partie de raccordement (24) sur un deuxième côté (25), opposé au premier côté (24) du canal de produit (7) et également dans le canal de produit (7),
formant la partie de terminaison (23) comme affaiblissements du matériel du conteneur, **caractérisé par**
la fourniture vers la partie d'arrêt (22) d'une prolongation vers la partie de raccordement (4) sur le premier côté (24) du canal de produit (7) et également dans le canal de produit (7).

2. Procédé tel que revendiqué à la revendication 1, comprenant en outre d'arranger l'amorce d'ouverture (20) avec une deuxième partie d'arrêt dans la partie de raccordement (4) sur le deuxième côté (25) du canal de produit (7).

3. Procédé tel que revendiqué à la revendication 2, dans lequel la deuxième partie d'arrêt est disposée de manière à être raccordée vers une arête extérieure (8) de la partie de raccordement (4).

4. Procédé tel que revendiqué dans l'une quelconque des revendications précédentes, où la partie de démarrage (21), la partie d'arrêt (22) et la partie de terminaison (23) sont formées en une étape.

5. Procédé tel que revendiqué dans l'une quelconque des revendications précédentes, où la formation de la partie de démarrage (21) ou de la partie de terminaison (23) est exécutée par pression.

6. Procédé tel que revendiqué dans l'une quelconque des revendications 1-5, où la formation de la partie de démarrage (21) ou de la partie de terminaison (23) est exécutée par découpe.

7. Procédé tel que revendiqué dans l'une quelconque des revendications 1-5, où la formation de la partie de démarrage (21) ou de la partie de terminaison (23) est exécutée par chauffage.

8. Procédé tel que revendiqué dans l'une quelconque des revendications précédentes, où la formation de la partie d'arrêt (22) est exécutée par pression, découpe ou chauffage.

9. Conteneur de type démontable pour des contenus liquides, comprenant
deux parois latérales opposées (12a, 12b), les parois étant raccordées le long d'une partie de raccordement (4) et définissant un compartiment (5),
lesdites parois latérales (12a, 12b) formant, dans une partie du coin supérieur, un canal de produit (7) à utiliser lors du vidage du conteneur de ses contenus,
une amorce d'ouverture (20) étant disposée avec un prolongement sur ledit canal de produit (7), le long de cette amorce d'ouverture (20) une languette (6) doit être séparée pour ouvrir le conteneur, ladite amorce d'ouverture (20) comprenant
une partie de démarrage (21) qui est formée avec un prolongement dans la partie de raccordement (4) sur un premier côté (24) dudit canal de produit (7) et qui requiert une première force de séparation (F1) pour séparer la languette (6) du conteneur (10) le long de cette partie de l'amorce d'ouverture (20) le long de laquelle s'étend la partie de démarrage (21),
un partie de terminaison (23) qui requiert une deuxième force de séparation (F2) pour séparer la languette (6) du conteneur le long de cette partie de l'amorce d'ouverture (20) le long de laquelle s'étend la partie de terminaison (23), et
un partie d'arrêt (22) qui requiert une troisième force de séparation (F3) pour séparer la languette (6) du conteneur le long de cette partie de l'amorce d'ouverture (20) le long de laquelle s'étend la partie d'arrêt (22),
la première (F1) et la deuxième (F2) force de séparation étant plus petites que la troisième force de séparation (F3), et
la partie d'arrêt (22) étant disposée entre la partie de démarrage (21) et la partie de terminaison (23),
le conteneur comprend en outre une paroi inférieure (13), le volume du compartiment (5) du conteneur étant dépendant de la position relative des parois,
ladite partie de terminaison (23) est formée d'un prolongement dans le canal de produit (7) et également dans la partie de raccordement (24) sur un deuxième côté (25) ledit premier côté opposé (24) dudit canal de produit (7),
ladite partie de terminaison est formée comme affaiblissements du matériel du conteneur, **caractérisé en ce que**,
ladite partie d'arrêt (22) est partiellement situé dans la partie de raccordement (4) sur le premier côté (24) du canal de produit (7) et également dans le canal de produit (7).

10. Conteneur tel que revendiqué à la revendication 9, dans lequel la partie d'arrêt (22) à une première extrémité est contigüe à la partie de démarrage (21) et à une deuxième extrémité est contigüe à la partie de terminaison (23).

11. Conteneur tel que revendiqué dans l'une quelconque des revendications 9-10, où ladite partie de démarrage (21) est raccordée à une arête extérieure (8) de la partie de raccordement (4) sur le premier côté (24) du canal de produit (7).

12. Conteneur tel que revendiqué dans la revendication 9, où ladite partie de terminaison (23) est raccordée à une arête extérieure (8) de la partie de raccordement (4) sur le deuxième côté (25) du canal de produit (7).

13. Conteneur tel que revendiqué dans l'une quelconque des revendications 9-12, où le conteneur (10) est fait d'un matériau plastique laminé.
